# EUROPÄISCHE PATENTSCHRIFT

(11) **EP 0 432 436 B1**
(45) Veröffentlichungstag und Bekanntmachung des Hinweises auf die Patenterteilung: **23.02.1994**
(21) Anmeldenummer: 90121004.7
(22) Anmeldetag: 02.11.1990
(51) Int. Cl.: F01N 7/18, F16L 27/10

(54) **Flexibles Leitungselement für Abgasleitungen von Verbrennungsmotoren bei Kraftfahrzeugen**
Flexible pipe component for exhaust conduits of internal combustion engines used on vehicles
Elément de conduite flexible pour tyaux d'échappement de moteurs de véhicules à combustion interne

(30) Priorität: 09.11.1989 DE 3937253; 26.10.1990 DE 4034055
(43) Veröffentlichungstag der Anmeldung: 19.06.1991
(73) Patentinhaber: Witzenmann GmbH Metallschlauch-Fabrik Pforzheim, D-75175 Pforzheim (DE)
(72) Erfinder: Quick, Klaus, Dipl.-Ing., W-7530 Pforzheim (DE); Tibus, Hans-Dieter, Dipl.-Ing., W-7530 Pforzheim-Büchenbronn (DE)
(74) Vertreter: Lemcke, Rupert, Dipl.-Ing.

(56) Entgegenhaltungen:
- EP-A- 0 297 861
- DE-A- 3 702 243
- DE-C- 3 505 699
- US-A- 2 056 840
- US-A- 2 867 242
- US-A- 2 958 550
- US-A- 3 044 805
- US-A- 3 740 832
- US-A- 4 204 707
- SOVIET INVENTIONS ILLUSTRATED, Sektion Q, Woche D11, 22. April 1981, Nr. 81-C2554D/11, Derwent Publications Ltd, London, GB; & SU-A-731 166 (UFA AVIATION)
- SOVIET INVENTIONS ILLUSTRATED, Sektion Q, Woche 8608, 8. März 1986, Nr. 86-054558/08, Derwent Publications Ltd, London, GB; & SU-A-1 171 633 (SKURATOV BI)
- SOVIET INVENTIONS ILLUSTRATED, Sektion Q, Woche K40, 16. November 1983, DerwentPublications Ltd, London, GB; & SU-A-976 207 (SHUSTOV) 23-11-1982
- SOVIET INVENTIONS ILLUSTRATED, Sektion Q, Woche 8436, 17. Oktober 1984, Derwent Publications Ltd, London, GB; & SU-A-1060 873 (SUSHIN) 15-12-1983
- SOVIET INVENTIONS ILLUSTRATED, Sektion Q, Woche E10, 21. April 1982, DerwentPublications Ltd, London, GB; & SU-A-832 232 (KABELSKII) 23-05-1981

## Beschreibung

Die Erfindung betrifft ein flexibles Leitungselement für Abgasleitung von Verbrennungsmotoren bei Kraftfahrzeugen mit einem mit zylindrischen Anschlußenden versehenen, schraubengangförmig oder ringgewellten Balg aus Metall und einem den Balg unter direktem Verbund umgebenden ersten Geflechtsschlauch aus Metalldraht, wobei Balg und erster Geflechtsschlauch endständig zur Bildung der Anschlußenden des Leitungselementes innerhalb eines zylindrischen Stützringes miteinander und mit diesem verpreßt und die Teile gegenseitig durch Anheften verbunden sind, und wobei wenigstens ein zusätzliches, von einem der Anschlußenden des Leitungselementes durch dortige Befestigung ausgehendes und im übrigen relativ zum Geflechtsschlauch bewegliches, flexibles, sich im wesentlichen über die Länge des Leitungselementes erstreckendes Dämpfungsglied an den ersten Geflechtsschlauch in Anlage zur Bewegungs- und Schwingungsdämpfung gebracht ist.

Ein Leitungselement im Rahmen eines Teiles dieser Gattung ist Gegenstand der älteren Patentanmeldung P 39 24 697.3-13. Es wird in der Regel als Zwischenstück in die im übrigen weitgehend starre Abgasleitung eingebaut, um Bewegungen und Schwingungen aufzunehmen und von der Weiterleitung an benachbarte Bauteile abzukoppeln, wie sie von der elastisch gelagerten Antriebsmaschine, Erschütterungen des Fahrzeuges, temperaturbedingten Längenänderungen etc. entstehen. Dabei gilt neben der Eigenschaft der Flexibilität die Aufmerksamkeit der Frage der Wärmedämmung, der Schallabsorption und der Dichtheit gegen Austritt von Abgasen, insbesondere in Verbindung mit Katalysatorfahrzeugen und verschärften Bestimmungen hinsichtlich Schall- und Abgasimmission.

Beim Gegenstand der Voranmeldung ist darüber hinaus eine einfachere und fertigungsgünstigere Gestaltung angestrebt, wozu die zylindrischen Balganschlußenden einen Innendurchmesser aufweisen, der kleiner als der lichte Innenquerschnitt des Balges ist, und wozu ein zusätzlich koaxial im Balg angeordneter, ohne Dichtungseinlage gewickelter Metallschlauch, dessen Außenquerschnitt kleiner als der lichte Innenquerschnitt des Balges ist, an seinen innerhalb der Balganschlußenden gelegenen und mit diesen bündig abschließenden Endstücken unter Zusammendrücken des Schlauchprofils und Ausgleich der Toleranzen gegenüber dem Innenquerschnitt der Balganschlußenden radial aufgeweitet ist. Dabei ist vorteilhafterweise auf die Balganschlußenden je ein zylindrisches Stützteil von außen aufgesetzt, mit dem zugeordneten Balganschlußende sowie dem Endstück des Metallschlauches radial verpreßt und mit dem Balganschlußende über den Umfang mehrfach durch Anheften verbunden, beispielsweise verschweißt.

Dieses Leitungselement hat in jeder Beziehung die von ihm erwarteten Gebrauchseigenschaften. Andererseits hat sich jedoch gezeigt, daß sich seine Fähigkeit zur Schwingungsdämpfung über die Standzeit gesehen verringert. Die Ursache hierfür wird im wesentlichen darin gesehen, daß der innere gewickelte Metallschlauch bzw. Agraffschlauch, der das hauptsächliche Dämpfungsglied für Schwingungen darstellt, mit zunehmender Laufleistung in seiner Dämpfungswirkung nachläßt. Ursache hierfür könnte ein gewisser Reibungsverschleiß in den einzelnen miteinander in formschlüssigem Eingriff befindlichen Wicklungen des Metallschlauches sein.

Durch die SU-976 207 ist es bekannt, im Bereich der Verbindung zwischen einen Balg und einem Geflechtsschlauch sowie benachbarter weiterführender Rohrleitung eine Hülse an der Rohrleitung mit zu befestigen, die endständig Geflechtsschlauch und Balg umgibt. Hierdurch wird aber lediglich eine gewisse Schutzfunktion für die genannten Befestigungsenden ausgeübt, ohne daß sich damit eine weitere Auswirkung auf den insgesamten weiteren Verlauf des Leitungselementes zeigen könnte.

Schließlich ist durch die US-A-3 740 832 ein Gegenstand der eingangs genannten Gattung bekannt, bei dem jedoch das Dämpfungsglied als weiche, elastische Zwischenlage zwischen einem Balg und einem Geflechtsschlauch ausgebildet ist. Eine solche Zwischenlage kann zwar bezüglich auftretender Schwingungen dämpfend wirken, jedoch im wesentlichen nur im Rahmen einer Eigenelastizität, durch die Schwingungen "verschluckt", nicht aber gebremst werden. Außerdem ist die Standzeit der bekannten Zwischenlage aus Materialgründen insbesondere bei den bei Abgasleitungen auftretenden hohen Temperaturen begrenzt.

Aufgabe der Erfindung ist es daher, ein Leitungselement der eingangs genannten Art mit einer zusätzlichen Dämpfung auszurüsten, die in gegebenenfalls auch nachstellbarer Weise eine bedeutende Standzeiterhöhung der Dämpfungseigenschaften garantiert, wobei insbesondere eine einfache und billige Konstruktion angestrebt und weitestgehend Unabhängigkeit von den Einflüssen des Abgasstromes erreicht werden soll.

Diese Aufgabe ist ausgehend von einem Leitungselement der eingangs genannten Art mit der Erfindung prinzipiell dadurch gelöst, daß die Dämpfung durch reibende Anlage wenigstens eines metallischen Dämpfungsgliedes an den ersten Geflechtsschlauch erfolgt.

Diese grundsätzliche Maßnahme nach der Erfindung führt also dazu, daß wenigstens eines der Anschlußenden des Leitungselementes durch seine Relativbewegungen zum anderen Leitungsende in schwingungsdämpfender Weise über das Dämpfungsglied auf den ersten Geflechtsschlauch einwirkt so, daß die aus den Bewegungen des Leitungselementes resultierenden Bewegungen des ersten Geflechtsschlauches zwar grundsätzlich stattfinden können, dadurch aber gegenüber dem Dämpfungsglied reibungsbehaftete Relativbewegungen eintreten.

Dadurch, daß das Dämpfungsglied auf der Außenseite des Balges angeordnet ist, ist es praktisch den abgasbedingten Belastungen, insbesondere Temperaturbelastungen entzogen, so daß hieraus eine negative Beeinflussung der Standzeit des Leitungselementes nicht mehr erwachsen kann.

Durch die erfindungsgemäße Gestaltung des Dämpfungsgliedes paßt sich dieses an die normalen Bewegungsvorgänge des Leitungselementes in Axial- und Lateralrichtung an, schränkt also insbesondere dessen Beweglichkeit nirgendwo ein.

Nach einer ersten Ausführungsform der Erfindung ist es zweckmäßig, daß das Dämpfungsglied ein zweiter, koaxial zum Leitungselement angeordneter und am ersten Geflechtsschlauch von außen anliegender Geflechtsschlauch ist, daß der zweite Geflechtsschlauch mit einem Ende am dortigen Anschlußende des Leitungselementes festgelegt ist, und daß das andere Ende des zweiten Geflechtsschlauches in Axialrichtung im Sinne einer Streckung gegebenenfalls ein- bzw. nachstellbar vorgespannt ist.

Hiermit werden zwei koaxial ineinander sitzende Geflechtsschläuche in gegenseitige Anlage gebracht, wobei der zweite Geflechtsschlauch vermöge seiner vorgespannten Streckung sich immer in Anlage am ersten Geflechtsschlauch befindet, da Geflechtsschläuche üblicher Bauform hren Durchmesser verringern, wenn sie gestreckt werden. Da andererseits der zweite Geflechtsschlauch nur an einem Ende gegenüber dem Leitungselement befestigt ist, befindet er sich in Anlage an dem ersten Geflechtsschlauch unabhängig von der Arbeitsweise bzw. Bewegungsstellung des ersten Geflechtsschlauches bzw. des mit ihm verbundenen Leitungselementes. Im Prinzip bewegen sich also bei der aufgabengemäßen Arbeitsweise des Leitungselementes die beiden genannten Geflechtsschläuche dauernd gegeneinander, was die erwünschte Dämpfungswirkung ergibt.

Zur näheren Ausgestaltung dieses Lösungsweges kann vorgesehen sein, daß der zweite Geflechtsschlauch mit seinen Enden zwischen Paaren von Halteringen gefaßt ist, daß das eine Halteringpaar mit dem zugeordneten Anschlußende des Leitungselementes bzw. dem dortigen Stützring verbunden ist, und daß das andere Halteringpaar durch gegebenenfalls ein- bzw. nachstellbare Federmittel in Bewegungsrichtung vom ersten Halteringpaar fort beaufschlagt bzw. vorgespannt ist.

Dabei kann vorgesehen sein, daß ausgehend von den Halteringpaaren sich nach radial außen erstreckende Stege von zum Leitungselement achsparallelen Führungsstangen durchquert sind, daß die Führungsstangen an einem der Stege axial festgelegt sind, und daß die Führungsstangen gegenüber dem anderen der Stege unter Federkraft gegen die Axialabstützung vorgespannt sind. Hier können die die Führungsstangen umgebenden Federn Schraubenfedern sein, die sich einerseits an einem gegebenenfalls verstellbaren Widerlager der Führungsstangen und andererseits am zugeordneten Steg abstützen.

Die so umrissene Lösung bietet einmal für den zweiten Geflechtsschlauch an seinem axial beweglichen bzw. freien Ende eine ausreichende Halterung bzw. Führung, wobei zu dieser Führung auch die Tatsache beiträgt, daß sich ja der zweite Geflechtsschlauch vermöge seiner in Streckrichtung gehenden Vorspannung dauernd auf dem ersten Geflechtsschlauch auflegt, somit sein kurzes, freies Ende eine ausreichende Abstützung erfährt.

Zum anderen ist aber auch in gegebenenfalls ein- oder nachstellbarer Weise eine genügende axiale Vorspannung des zweiten Geflechtsschlauches möglich, so daß einerseits die Größe der Dämpfungswirkung den jeweiligen Verhältnissen angepaßt werden kann, zum anderen aber auch nach längerer Betriebszeit eine Nachstellung der Dämpfungswirkung durch Änderung der Axialvorspannung des zweiten Geflechtsschlauches vorgenommen werden kann.

Fußend im wesentlichen auf der vorstehenden Konstruktion kann jedoch auch vorgesehen sein, daß von den Halteringpaaren nach radial außen sich erstreckende Stege ausgehen, und daß zwischen die Stege U-förmig gebogene Bügelfedern mit ihren freien Enden eingespannt sind. Hier werden also die erwähnten Führungsstangen mit den sie umgebenden Schraubenfedern ersetzt durch die genannten Bügelfedern, die auf der anderen Seite den Vorteil haben können, daß sie mit ihrem zwischen den Stegen gelegenen Teil in Anlage an dem zweiten Geflechtsschlauch sind und damit die erwünschte Dämpfungswirkung unterstützen, wobei zweckmäßigerweise die U-förmigen Bügelfedern zueinander verschränkt angeordnet werden können.

Als Alternative zur vorstehend geschilderten Ausführungsform kann auch vorgesehen sein, daß von den Halteringpaarensich nach radial außen erstreckende Stege in Form umlaufender Bunde ausgehen und daß zwischen die Bunde wenigstens eine schraubengangförmig umlaufende Feder mit ihren freien Enden unter Axialbelastung eingespannt ist.

Nach einer weiteren Ausführungsform gemäß der Erfindung kann ein Lösungsweg vorteilhaft sein, der vorsieht, daß das Dämpfungsglied durch vom Anschlußende des Leitungselementes in dessen Längsrichtung ausgehende, mit ihren freien Enden am ersten Geflechtsschlauch von außen in Anlage befindliche Finger bzw. Blech- oder Drahtstreifen gebildet ist. Bei einer solchen Bauform erstrecken sich die in Axialrichtung im wesentlichen steifen Finger korbförmig von einem Anschlußende des Leitungselementes ausgehend über dessen Außenbereich und liegen mit ihren freien Enden auf dem ersten Geflechtsschlauch an, um so in von der Arbeitsweise des Leitungselementes unabhängiger Art durch Relativbewegung gegenüber dem ersten Geflechtsschlauch die gewünschte Dampfung herbeizuführen.

Hier kann vorgesehen sein, daß die Finger von einem gemeinsamen, im Bereich des Anschlußendes festgelegten Haltering ausgehen, der zweckmäßig durch den dortigen Stützring gebildet ist.

Die Fingerenden können gegen den ersten Geflechtsschlauch federnd vorgespannt sein, um sich immer an diesem in Anlage zu befinden. Es besteht jedoch auch die Möglichkeit, daß die Fingerenden durch einen von außen aufgesetzten, federnden und gegebenenfalls nachstellbaren Spannring gegen den ersten Geflechtsschlauch in Anlage gehalten sind. Gerade bei diesem Lösungsweg lassen sich höhere Anlage- und damit Reibkräfte zwischen Finderenden und ersten Geflechtsschlauch erzielen. Ferner läßt sich nach längerer Betriebszeit die Anlagekraft der Fingerenden gegenüber dem ersten Geflechtsschlauch korrigieren bzw. nachstellen, sofern keine selbsttätig konstante Nachstellung erfolgen soll.

Nach einer anderen Bauform kann vorgesehen sein, daß die Finger von einem zweiten, an ihnen gegebenenfalls axial vorgespannt anliegenden, koaxial zum Leitungselement angeordneten Geflechtsschlauch außen umgeben sind und daß dieser zweite Geflechtsschlauch endständig an den Anschlußenden des Leitungselementes festgelegt ist. Hier ist also in Abhängigkeit von der Bewegung des Leitungselementes die Anlage der Finger am ersten Geflechtsschlauch durch den zweiten Geflechtsschlauch gewährleistet, wobei sich dämpfende Reibung zwischen den Fingern und beiden Geflechtsschläuchen ergibt.

In einer dem Vorstehenden vergleichbaren Weise kann vorgesehen sein, daß die Finger von wenigstens einem sich im wesentlichen über die Länge des Leitungselementes erstreckenden Federelement in Form einer Schraubenfeder umgeben sind und daß der Innendurchmesser des Federelementes in dessen entspannten Zustand kleiner als der Außendurchmesser der Fingeranordnung ist. Hier ist es also das Federelement in Form einer Schraubenfeder, das die Finger in Anlage an den ersten Geflechtsschlauch hält und damit die dämpfende Reibwirkung zwischen Fingern und erstem Geflechtsschlauch garantiert.

Nach einer weiter anderen Ausführungsform der Erfindug kann es vorteilhaft sein, daß das Dämpfungsglied durch wenigstens eine von wenigstens einem Anschlußende in dessen Längsrichtung ausgehende, mit ihrem Innenquerschnitt am ersten Geflechtsschlauch unter Radialspannung in Anlage befindliche Schraubenfeder gebildet ist. Eine solche einseitig festgelegte Schraubenfeder befindet sich ähnlich, wie dies bei den vorstehend diskutierten Fingern der Fall ist, in reibender Anlage am ersten Geflechtsschlauch und dämpft damit dessen Bewegung. Dabei kann es zweckmäßig sein, daß der Innenquerschnitt der Feder abweichend vom Außenquerschnitt des ersten Geflechtsschlauches ausgebildet ist, also beispielsweise eine ovale Form hat, so daß sich eine Anlage zwischen Feder und Geflechtsschlauch nicht üder die gesamte Innenkontur der Feder ergibt. Damit kann die Größe der durch die Feder auf den Geflechtsschlauch ausgeübten Dämpfungswirkung konstruktiv eingestellt bzw. gesteuert werden.

Für die vorstehend genannten Fälle kann das Federmaterial Kreisquerschnitt haben. Genausogut kann jedoch auch Federmaterial in Frage kommen, welches Rechteckquerschnitt nach Art eines Flachbandes aufweist, wobei die Feder dann mit einer der größeren Oberflächen am ersten Geflechtsschlauch anliegt. Auch durch diese Maßnahmen läßt sich die Größe der dämpfenden Reibung zwischen Feder und erstem Geflechtsschlauch konstruktiv vorherbestimmen.

Auch ist es aus den von den vorgenannten Fällen denkbar, daß eine den ersten Geflechtsschlauch umgebende Feder mit Rechteckquerschnitt innerhalb einer gegebenenfalls gegenläufig gewundenen Feder mit Kreis- oder Rechteckquerschnitt angeordnet ist, um die Reibungs- und damit die Dämpfungswirkung zu beeinflussen, insbesondere zu vergrößern.

Nach einer wiederum anderen Ausführungsform kann es zweckmäßig sein, daß das Dämpfungsglied durch vom Anschlußende des Leitungselementes in dessen Längsrichtung ausgehende, zwischen Balg und erstem Geflechtsschlauch angeordnete Finger bzw. Blechstreifen gebildet ist, wobei auch hier die Finger von einem gemeinsamen, im Bereich des Anschlußendes festgelegten Haltering ausgehen können. Damit ist das Dämpfungsglied in den Bereich zwischen Balg und erstem Geflechtsschlauch verlegt, wo es gleichermaßen auf den ersten Geflechtsschlauch und den Balg wirken kann, indem die axial Relativbewegungen dieser beiden Teile zu Reibung gegenüber dem Dämpfungsglied in Form der Finger bzw. Blechstreifen führt. Hiermit ist also ein Beispiel dafür gegeben, daß das Dämpfungsglied auf den ersten Geflechtsschlauch nicht nur von außen sondern auch von innen einwirken kann, wobei im letztgenannten Falle die Effektivität des Dämfpungsgliedes durch dessen gleichzeitige Einwirkung auch auf den Balg erhöht wird.

In weiterer Ausführung des erfindungsgemäßen Lösungsgedankens kann bei den entsprechenden vorgenannten Bauformen vorgesehen sein, daß je ein Dämpfungsglied mit Fingern von beiden Enden des Leitungselementes ausgehend vorgesehen ist. Es wird also von beiden Enden des Leitungselementes ausgehend jeweils voneinander getrennt das Dämpfungsglied angebracht. Um hier gegebenenfalls bestehenden Platzproblemenen gerecht zu werden, kann vorgesehen sein, daß die sich gegenläufig erstreckenden Finger verzahnungsförmig ineinander greifend angeordnet sind, wobei es durchaus auch vorteilhaft sein kann, daß die Finger unterschiedliche Länge aufweisen, um jeweils - über die axiale Länge des Leitungselementes gesehen - an möglichst vielen unterschiedlichen Axialpositionen wirksam zu werden.

Was die Anlage der Finger bzw. Fingerenden gegenüber dem ersten Geflechtsschlauch bzw. dem Balg betrifft, so kann diese je nach den Umständen des Einzelfalles punktförmig, linienförmig oder flächenförmig gestaltet sein, indem der mit dem ersten Geflechtsschlauch bzw. dem Balg in Berührung kommende Teil der Finger entsprechend quer zur Längsachse des Leitungselementes bzw. parallel zu dessen Längsachse gewölbt ist. Auf diese Weise läßt sich zusätzlich die Größe des gegenseitigen Anlagebereiches zwischen erstem Geflechtsschlauch und Dämpfungsglied und damit schließlich auch die Größe der Dämpfungswirkung beeinflussen.

In diesem Zusammenhang können die Finger auch über ihre Längserstreckung wellenförmig zur intermittiertenden Anlage an den ersten Geflechtsschlauch ausgebildet sein. Diese Ausbildung empfiehlt sich besonders für Finger aus Drahtmaterial zur Schaffung bestimmter Reibungsverhältnisse gegenüber dem Geflechtsschlauch, wobei solche Finger aus Drahtmaterial gegenüber denen aus Blechstreifen den Vorzug allseitiger Biegbarkeit haben, so daß sie die Flexibilität des Leitungselementes kaum beeinflussen.

Für alle vorstehend geschilderten und vergleichbaren Lösungswege mag gemeinsam noch gelten, daß für die Relativbewegung zwischen erstem Geflechtsschlauch und Dämpfungsglied die Anbringung verschleißhemmender bzw. die Gleitbewegung erleichternder Mittel vorteilhaft sein kann. Hierfür eignet sich in an sich bekannter Weise die Verwendung gleitfähiger Materialien wie Kupfer, Messing oder temperaturbeständiger Kunststoff, mit denen die in Rede stehenden Teile beispielsweise beschichtet sein können. Andererseits kann beispielsweise bei dem ersten und zweiten Geflechtsschlauch die Einfügung von sogenannten Opferdrähten aus Kupfer oder Messing vorgesehen sein.

Schließlich kann auch im vorliegenden Falle die Konstruktion so gestaltet sein, daß, wie bereits in der Beschreibungseinleitung erwähnt, im Balg koaxial ein ohne Dichtungseinlage gewickelter Metallschlauch angeordnet ist, daß der Außenquerschnitt des Metallschlauches kleiner ist als der lichte Innenquerschnitt des Balges ist, und daß der Metallschlauch endständig mit den Anschlußenden des Leitungselementes verpreßt und gegebenenfalls durch Anheften verbunden ist.

Weitere wesentliche Merkmale und Einzelheiten der Erfindung ergeben sich aus der nachfolgenden Beschreibung von Ausführungsformen, die auf der Zeichnung dargestellt sind. In der Zeichnung zeigen die
- Fig. 1 bis 3 und 5: verschiedene Bauformen des Erfindungsgegenstandes in Seitenansicht, teilweise dabei im Axialschnitt;
- Fig. 4: eine Einzelheit aus Fig. 3 in abgeänderter Form sowohl in Seitenansicht als auch in axialer Schnittansicht bezogen auf Fig. 3 von links gesehen und
- Fig. 6 bis 16: weitere Ausführungsformen der Erfindung, teilweise in vereinfachten Ausschnitten gemäß der Darstellungsform nach den vorhergehenden Figuren.

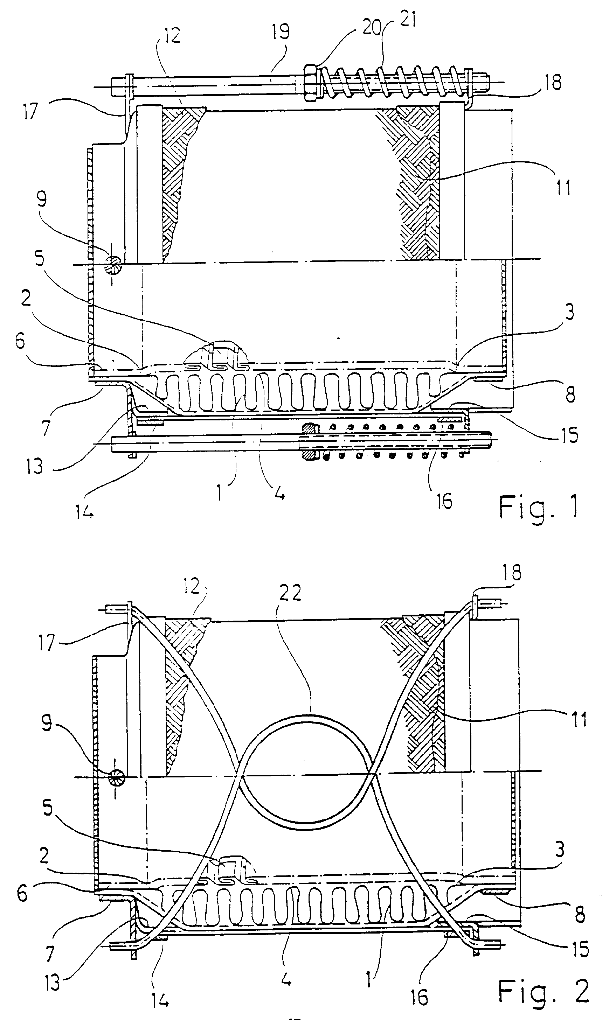

Die in den Fig. 1 bis 5 gezeigten Ausführungsformen gehen von dem gleichen Grundaufbau eines flexiblen Leitungselementes für Abgasleitungen von Verbrennungsmotoren bei Kraftfahrzeugen aus, weshalb insoweit auch in allen diesen Figuren die gleichen Bezugszeichen verwendet werden.

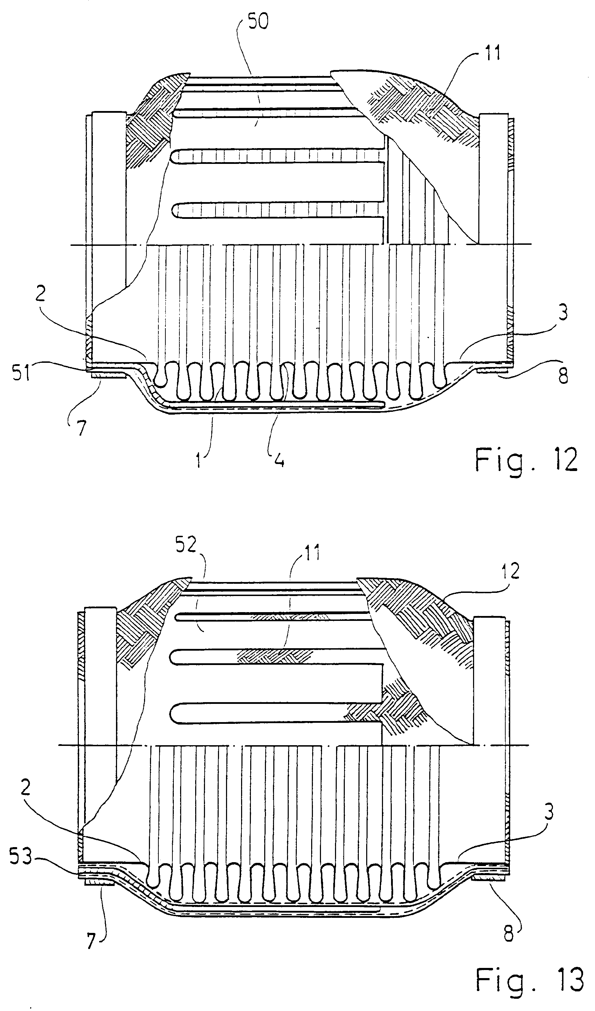

Der Grundaufbau wird nachfolgend anhand der Fig. 1 erläutert, ohne daß diese Erläuterung im einzelnen noch einmal für die weiteren Figuren wiederholt würde. Soweit die Fig. 12 und 13 eine Abweichung von dem genannten Grundaufbau dadurch enthalten, daß der noch zu beschreibende innere Metallschlauch fortgelassen ist, gilt die Möglichkeit einer solchen Abweichung auch für die übrigen Figuren.

Gemäß Fig. 1 besteht das Leitungselement aus einem schrauben- oder ringförmig gewellten Metallbalg 1 mit zylindrischen Balganschlußenden 2, 3, deren Innendurchmesser kleiner als der Innendurchmesser der nach innen ragenden Balgwellen 4 sein kann.

In den Balg 1 ist ein schraubengangförmig gewickelter Metallschlauch, beispielsweise ein Agraffschlauch 5, eingesetzt, dessen Außendurchmesser kleiner als der Innendurchmesser der Balganschlußenden 2, 3 ist.

An den gemeinsamen Enden sind die Balganschlußenden 2, 3 und die Endstücke 6 des Metallschlauches 5 in Radialrichtung miteinander verpreßt, indem die Endstücke 6 unter Zusammendrücken des Wickelprofiles des Metallschlauches 5 radial aufgeweitet sind, wobei gleichzeitig ein eventuelles Radialspiel des Metallschlauches 5 gegenüber den Balganschlußenden 2, 3 überbrückt wird. Gleichzeitig sind von außen auf die Balganschlußenden 2, 3 gesetzte Stützteile in Form von Stützringen 7, 8 radial im Querschnitt verringert, so daß sich insgesamt im Ergebnis aus Endstücken 6, Balganschlußenden 2, 3 und Stützringen 7, 8 ein fest zusammengedrückter Abschlußverbund ergibt, der zum Anschweißen an eine weiterführende Rohrleitung eine genügend massive und dichte Stirnkante bietet. Um den genannten Anschlußverbund weiter stabil zu gestalten, können über den Umfang der Stützringe 7, 8 verteilt Schweißpunkte 9 vorgesehen sein.

Wie weiterhin aus Fig. 1 ersichtlich, ist der Balg 1 durch einen Geflechtsschlauch 11 ummantelt, dessen Enden zwischen den Anschlußenden 2, 3 des Balges und den Stützringen 7, 8 eingefangen und mit diesen festgelegt sind. Der Geflechtsschlauch 11 dient in bekannter Weise der Axialabstützung der beiden Enden des Leitungselementes gegeneinander, was bei plötzlich auftretenden Massenkräften von Bedeutung ist. Er verhindert also eine Überdehnung des Balges 1.

Über dem Geflechtsschlauch 11 ist nunmehr ein zweiter Geflechtsschlauch 12 angeordnet, der mit seinem bezogen auf Fig. 1 linken Ende am dortigen Anschlußende des Leitungselementes festgelegt ist, wozu der Stützring 7 einen inneren Haltering 13 bildet, um den das Ende des Geflechtsschlauches 12 gelegt und auf dem das Ende des Geflechtsschlauches 12 durch einen äußeren Haltering 14 festgelegt ist, indem die beiden Halteringe 13, 14 miteinander verpreßt sind.

Das andere Ende des Geflechtsschlauches 12 sitzt zwischen einem inneren Haltering 15 und einem äußeren Haltering 16 in der gleichen Weise fest, wobei jedoch die Halteringe 15, 16 keine Verbindung mit dem dortigen Ende des Leitungselementes haben.

Andererseits gehen vom Stützring 7 sowie Haltering 15 nach radial außen Stege 17, 18, die auch als umlaufende Bunde gestaltet sein könnten, aus, die Bohrungen für die zum Leitungselement achsparallele Aufnahme von Führungsstangen 19 aufweisen. Die Führungsstangen 19 sind am Teil 17 axial durch mit ihnen fest verbundene Ringe form- und kraftschlüssig festgelegt, während sie am Teil 18 verschieblich geführt sind. Um einen gegenseitigen seitlichen oder winkelmäßigen Versatz der Enden des Leitungselementes nicht zu behindern, haben die Führungsstangen ausreichendes Spiel in den sie aufnehmenden Bohrungen der Stege 17, 18. Ferner tragen die Stangen 19 über Muttern 20 einstellbar ein Widerlager für Schraubendruckfedern 21, die sich andererseits am Teil 18 abstützen und damit trachten, den Abstand zwischen den Teilen 17 und 18 möglichst zu vergrößern.

Diese axiale Vorspannung überträgt sich auf den Geflechtsschlauch 12 und führt bei diesem in an sich bekannter Weise zu einer Durchmesserreduktion und damit zu einer dauernden Anlage des Geflechtsschlauches 12 auf dem Geflechtsschlauch 11. Dies ergibt eine Dämpfung für das Leitungselement, da die beiden genannten Geflechtsschläuche unabhängig voneinander ineinander verschieblich sind.

Wie durch die Einstellbarkeit der Muttern 12 veranschaulicht, kann die Druckvorspannung der Federn 21 verändert werden, folglich auch die Festigkeit, mit der die beiden Geflechtsschläuche 11, 12 aneinanderliegen, so daß die genannte Dämpfungswirkung in ihrer Größe eingestellt oder aber auch nach einer längeren Betriebszeit nachgestellt werden kann.

Der Gegenstand gemäß Fig. 2 stimmt mit dem gemäß Fig. 1 konstruktiv weitestgehend überein. Unterschiedlich ist lediglich, daß die die beiden Teile 17, 18 auseinanderdrückenden Federkräfte durch U-förmig gebogene Bügelfedern 22 gebildet sind, die mit ihren freien Enden in Bohrungen der Teile 17, 18 eingesteckt sind. Den Schenkeln der Bügelfedern 22 kann ein solcher Verlauf gegeben werden, daß sie sich der zylindermantelförmigen Umfangskontur des Leitungselementes anpassen und gegebenenfalls auch auf dem äußeren Geflechtsschlauch 12 anliegen, um auf diesem reibend bzw. gleitend an der gewünschten Dämpfung des Leitungselementes teilzuhaben.

Um ein unerwünschtes Abheben der Bügelfedern vom Geflechtsschlauch 12 zu verhindern, sind die Bügelfedern in der aus Fig. 2 ersichtlichen Weise ineinander verschlungen.

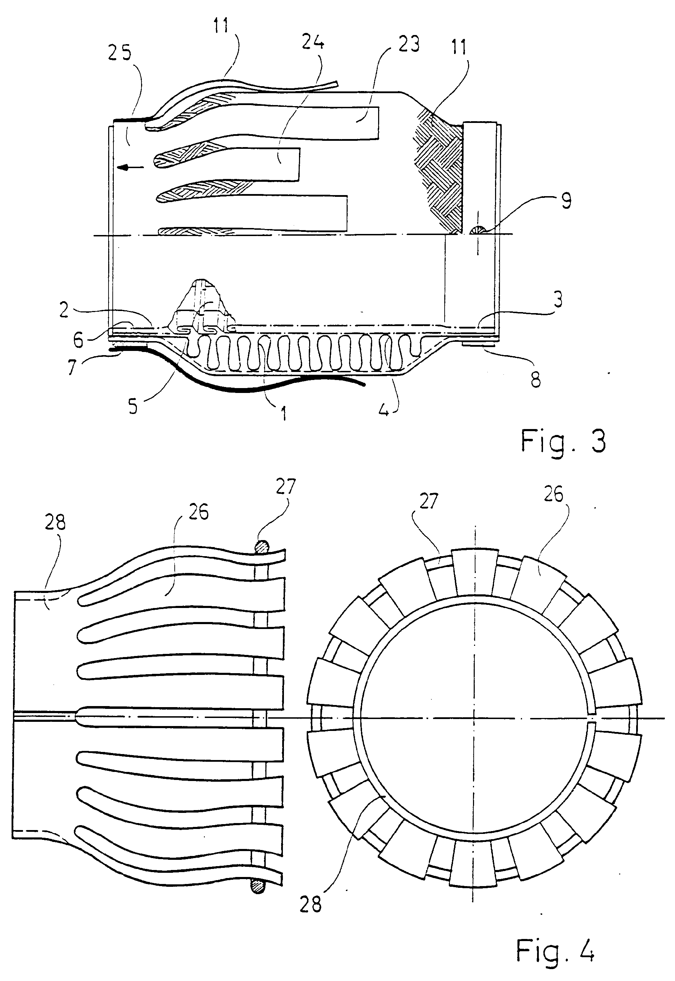

Fig. 3 zeigt wieder ausgehend von dem Grundaufbau des anhand der Fig. 1 geschilderten Leitungselementes ein Dämpfungsglied, das aus vom linken Anschlußende des Leitungselementes in dessen Längsrichtung ausgehenden, mit ihren freien Enden am ersten Geflechtsschlauch 11 in Anlage befindlichen Fingern bzw. Blechstreifen 23, 24 von einem gemeinsamen, im Bereich des linken Anschlußendes der Leitungselementes festgelegten Haltering 25 ausgehen, der auf den Stützring 7 des Leitungselementes aufgesetzt und an diesem beispielsweise durch Punktschweißen festgelegt sein kann. Dabei könnte auch die Möglichkeit bestehen, daß Haltering 25 und Stützring 7 ein gemeinsames Bauteil sind.

Die Finger 23, 24 haben im Bereich ihrer freien Enden in Richtung auf die Achse des Leitungselementes gewölbte Krümmung, mit der sie auf dem Geflechtsschlauch 11 anliegen und so die bereits anhand der Fig. 1 und 2 geschilderte Dämpfungswirkung ausüben. Was die Größe und Gestalt der Anlagefläche zwischen den Fingern und dem Geflechtsschlauch 11 betrifft - und dies gilt auch für die nachfolgenden Ausführungsformen -, so kann durch entsprechende Gestaltung der Finger eine punktförmige, linienförmige oder auch flächige Anlage am Geflechtsschlauch 11 erreicht werden, je nachdem, wie der Wert der Dämpfung gewünscht wird.

Bei der in Fig. 3 dargestellten Ausführungsform sind die Finger aus einem federnden Material hergestellt, so daß sie vermöge eigener Anfederkraft an dem Geflechtsschlauch 11 anliegen. Es besteht jedoch, wie anhand des Beispieles gemäß Fig. 4 ersichtlich, auch die Möglichkeit, hier grundsätzlich kein selbstfederndes Material zu verwenden, sondern die freien Enden der in diesem Falle gleich langen Finger 26 durch einen außen aufgesetzten, selbstfedernden und gegebenenfalls nachstellbaren Spannring 27 in definierter Anlage an dem Geflechtsschlauch 11 zu halten. Im übrigen gehen auch bei dem in Fig. 4 dargestellten Beispiel die Finger 26 wieder von einem gemeinsamen Haltering 28 aus, der in entsprechender Weise auf dem Stützring 7 des Leitungselementes gemäß Fig. 3 aufgesetzt sein könnte.

Die rechte Darstellung in Fig. 4 zeigt den Gegenstand gemäß der linken Darstellung von - bezogen auf die Zeichnung - links aus gesehen.

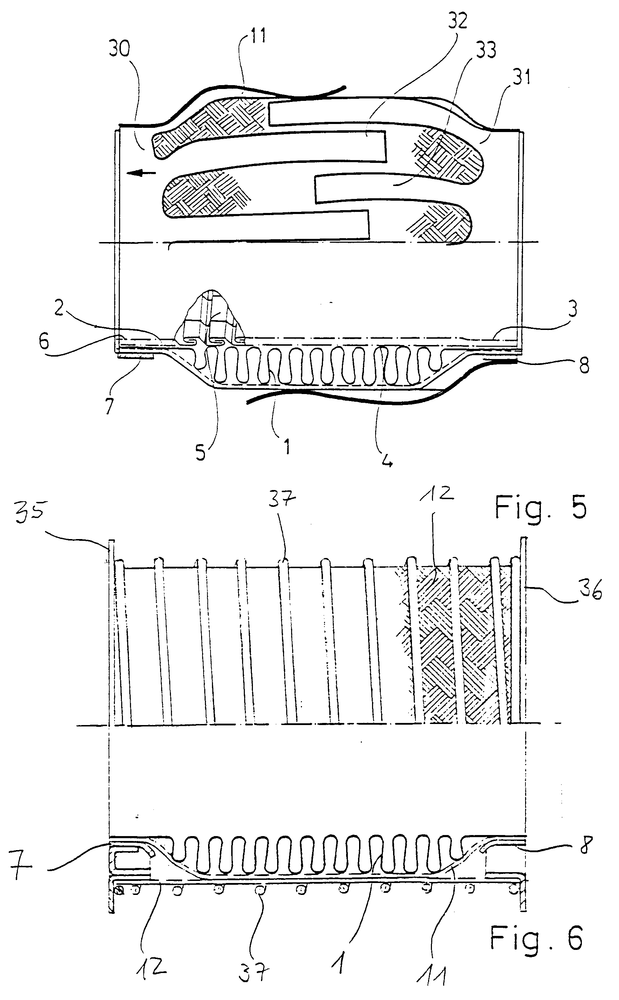

Die Ausführungsform gemäß Fig. 5 zeigt ein Beispiel, bei dem von beiden Enden des Leitungselementes ausgehend Halteringe 30, 31 mit Fingern 32, 33 vorgesehen sind, die verzahnungsförmig sich überdeckend ineinander greifen und somit - auch unter Berücksichtigung unterschiedlicher Längen der Finger - einen großen Oberflächenbereich des Geflechtsschlauches 11 dämpfend abdecken. Im übrigen gilt für die Ausführungsform gemäß Fig. 5 bezüglich der Funktionsweise der durch die Finger 32, 33 dargestellte Dämpfungsglieder das anhand der Fig. 3 und 4 Erläuterte entsprechend.

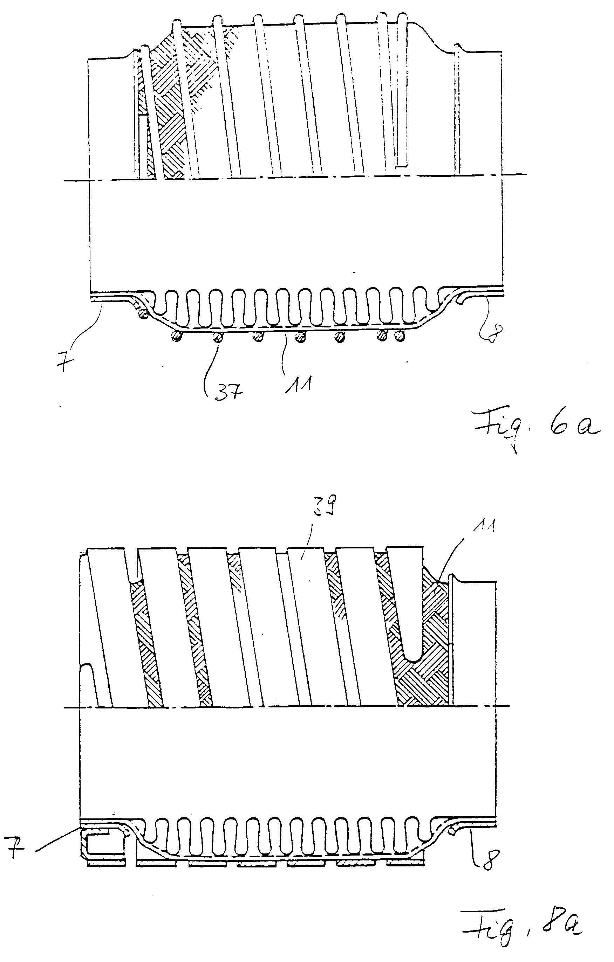

Fig. 6 zeigt eine Variante zur Ausführungsform gemäß Fig. 2. Danach ist der zweite Geflechtsschlauch 12 mit Endringen 35, 36 verbunden, von denen einer am entspechenden Anschlußende des Leitungselementes festgelegt sein kann. Zwischen den Endringen ist eine schraubengangförmige umlaufende Feder 37 angeordnet und unter axialer Druckvorspannung gegen die Endringe 35, 36 abgestützt so, daß sie den zweiten Geflechtsschlauch 12 zu strecken und damit auf dem ersten Geflechtsschlauch 11 in Anlage zu bringen sucht. Die Wirkung einer derartigen Konstruktion entspricht dann wieder der anhand der Fig. 2 erläuterten Funktionsweise.

Die Bauform gemäß Fig. 6 ist jedoch auch so denkbar, daß die Feder 37 nur mit einem Ende an einem der Stützringe 7 bzw. 8 (siehe Fig. 6a) oder einem der Endringe 35 bzw. 36 festgelegt ist, während ihr anderes Ende vom dortigen Stützring bzw. Endring mit Abstand frei ist. Gleichzeitig hat die Feder 37 im entspannten Zustand einen Innendurchmesser, der kleiner als der Außendurchmesser des ersten Geflechtsschlauch 11 bzw. eines darüber gezogenen zweiten Geflechtsschlauch 12 im eingebauten Zustand ist. Auf diese Weise drückt die Feder 37 radial auf den ersten Geflechtsschlauch 11 bzw. den über diesen gezogenen zweiten Geflechtsschlauch 12 und verursacht damit die däpfende Reibung am ersten Geflechtsschlauch 11 bzw. zwischen erstem und zwei tem Geflechtsschlauch sowie zwischen zweitem Geflechtsschlauch 12 und Feder 37.

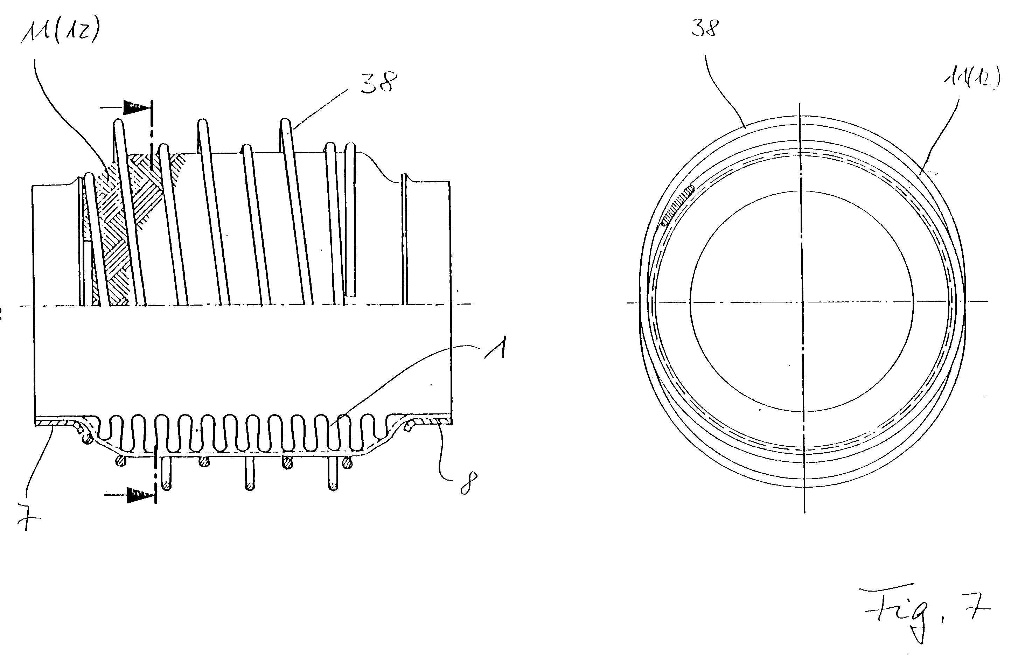

Im Rahmen dieser zuletzt genannten Variationsmöglichkeiten besteht gemäß Fig. 7, die eine Seiten- und Stirnansicht des Erfindungsgegenstandes zeigt, die Möglichkeit, eine der Feder 37 entsprechende Feder 38 wenigstens teilweise in ihrer Innenquerschnittsform abweichend von dem Außenquerschnitt des ersten Geflechtsschlauches 11 bzw. des zweiten Geflechtsschlauches 12 auszubilden so, daß nicht die gesamte Innenkontur der Feder 38 am jeweiligen Geflechtsschlauch anliegt sondern die Größe des Anlagebereiches durch die Orte der Übereinstimmung der Innenkontur der Feder 38 mit der Außenkontur des Geflechtsschlauches 11 bzw. 12 bestimmt ist. Dabei kann, wie insbesondere aus der linken Ansicht der Fig. 7 ersichtlich, über die Länge der Feder 38 ein Wechsel deren Verlaufes und damit eine Änderung deren Innenquerschnittes stattfinden.

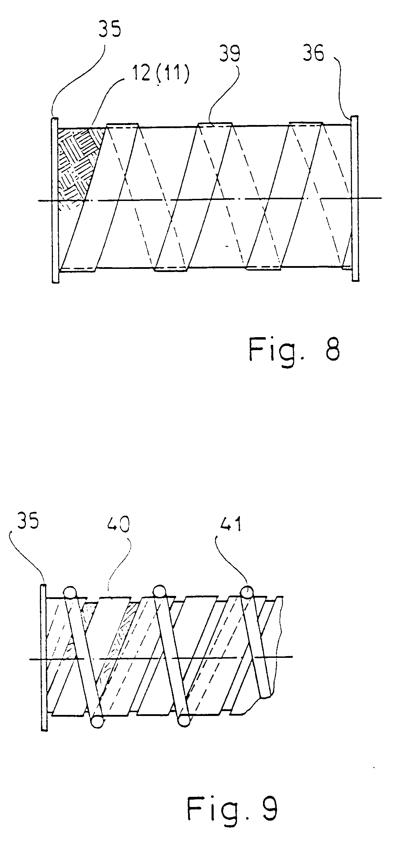

Zu den insoweit anhand der Fig. 6, 6a und 7 geschilderten Ausführungsmöglichkeiten zeigen Fig. 8 und 8a Varianten dahingehend, daß eine schraubengangförmige umlaufende Feder 39 aus Flachbandmaterial ausgebildet ist so, daß sie mit einer größeren Oberfläche an dem Geflechtsschlauch 12 bzw. 11 anliegen und eine dementsprechend größere Dämpfungswirkung gegenüber dem Geflechtsschlauch ausüben kann. Dabei betrifft wieder Fig. 8 eine Bauform, gemäß der ein zweiter Geflechtsschlauch 12 über Endringe 35, 36 axial vorgespannt wird, während Fig. 8a den Fall enthält, daß die einseitig am Stützring 7 angeschlagene Feder 39 einen kleineren Innendurchmesser aufweist als den Außendurchmesser des Geflechts 11 bzw. 12.

Fig. 9 und 9a sind in Weiterbildung des Gegenstandes gemäß Fig. 8 bzw. 8a eine Ergänzung um den Gegenstand gemäß Fig. 6 bzw. 6a so, daß eine Flachbandfeder 40 von einer gegenläufig gewickelten Feder 41 aus Material mit Kreisquerschnitt umfangen und radial mit einer unterstützenden Vorspannung beaufschlagt ist.

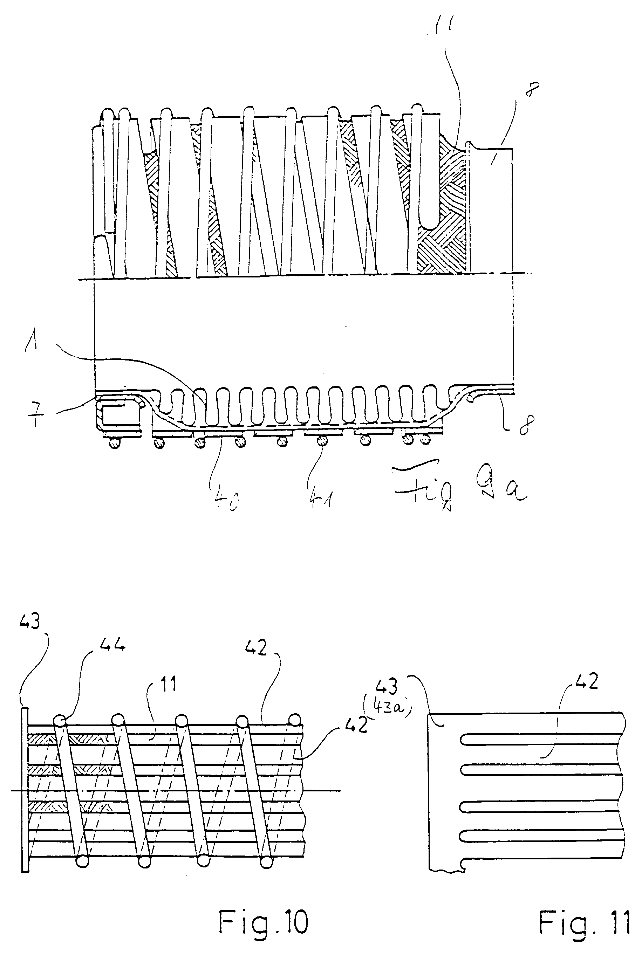

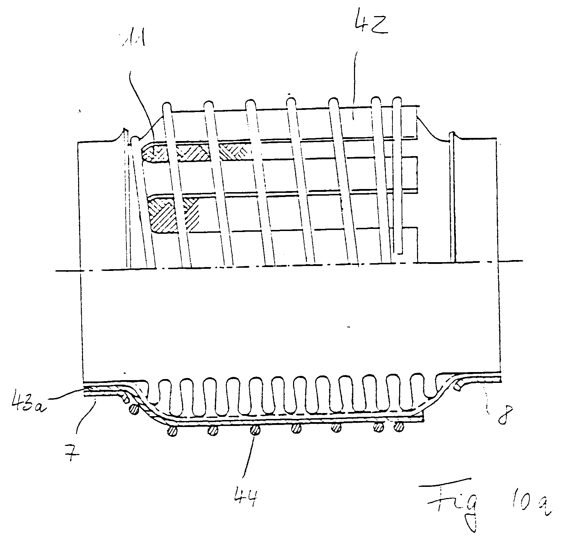

Die Fig. 10, 10a und 11 zeigen Beispiele zu den Fig. 3 bis 5 unter Berücksichtigung der anhand der Fig. 6 bis 9 erläuterten Möglichkeiten. Demgemäß ist der erste Geflechtsschlauch 11 eines Leitungselementes, das wieder dem Grundaufbau des Leitungselementes gemäß Fig. 1 entsprechen mag, von einem Dämpfungsglied umgeben, das aus vom linken Anschlußende des Leitungselementes in dessen Längsrichtung ausgehenden, mit ihren freien Enden am ersten Geflechtsschlauch 11 in Anlage befindlichen Fingern bzw. Blechstreifen 42 besteht, wobei die Blechstreifen von einem gemeinsamen, im Bereich des linken Anschlußendes des Leitungselementes festgelegten Haltering 43 bzw. einem innerhalb des Stützringes 7 eingefangenen Ring 43a ausgehen.

Die Finger 42 erstrecken sich achsparallel zum Leitungselement in einer auf dem ersten Geflechtsschlauch 11 anliegenden Weise.

Um die Fingeranordnung ist eine schraubengangförmig gewundene Feder 44 gelegt, deren Innendurchmesser im entspannten Zustand kleiner als der Außendurchmesser der Fingeranordnung 42 ist so, daß im eingebauten Zustand die Feder 44 mit ihren Windungen die Finger 42 radial in Anlage an den ersten Geflechtsschlauch 11 drückt. Damit entsteht bei betriebsbedingten Bewegungen des Leitungselementes Relativbewegung und dadurch Reibung zwischen dem ersten Geflechtsschlauch 11 und den Fingern 42, was die erwünschte Dämpfung bewirkt. Die Reibungskraft ist durch die einschnürende Wirkung der Feder 44 auf die Finger 42 erzeugt.

Fig. 11 zeigt den Bund 43 bzw. 43a und die Finger 42 als vom Stanzen kommendes Zwischenprodukt, woraus ersichtlich ist, daß diese Käfiganordnung zunächst als flaches Blechstanzteil hergestellt werden kann, aus dem dann durch Hochbördeln des Bundes 43 und Umlegen des Stanzlings um die spätere Achse des Leitungselementes der aus Fig. 10 ersichtliche Korb entsteht oder durch Belassen des Bundes 43 später der Ring 43a gemäß Fig. 10a gebildet ist.

Fig. 12 zeigt wiederum in vollständiger Form ein Leitungselement gemäß Fig. 1, allerdings unter Fortlassung des inneren Metallschlauches 5, bei dem zwischen erstem Geflechtsschlauch 11 und Balg 1 ein Dämpfungsglied aus sich achsparallel erstreckenden und über den Umfang des Balges 1 regelmäßig verteilt angeordneten Blechfingern 50 vorgesehen ist, die an einem, vorliegend dem linken Ende in einem gemeinsamen Ring 51 zusammenlaufen, der zwischen Balganschlußende 2 und der Kombination aus axialem Ende des Geflechtsschlauches 11 sowie dem Stützring 7 durch radiales Verpressen eingebunden ist.

Die Finger 50 erstrecken sich über den größten Teil der Länge des Balges 1 in geradliniger und gegebenenfalls der Umfangskontur von Balg 1 und Geflechtsschlauch 11 angepaßten Weise, so daß sie bei betriebsbedingten Bewegungen innerhalb des Leitungselementes an der Außenseite des Balges 1 einerseits und an der Innenseite des Geflechtsschlauches 11 andererseits reiben und damit insbesondere an letzterem die hier zur Diskussion stehende Dämpfung verursachen.

Fig. 13 zeigt eine Abwandlung des Gegenstandes gemäß Fig. 12 dahingehend, daß nunmehr bei Vorhandensein eines zweiten Geflechtsschlauches 12 die Fingeranordnung 52 mit sie verbindendem Ringe 53 von dem im vorliegenden Falle linken Ende des Leitungselementes ausgehend zwischen den beiden Geflechtsschläuchen 11, 12 angeordnet ist, wobei hier der äußere bzw. zweite Geflechtsschlauch 12 an beiden Enden des Leitungselementes festgelegt ist, um die Fingeranordnung 52 in Richtung auf den ersten Geflechtsschlauch 11 vorzuspannen und gleichzeitig an der durch die Finger 52 ausgeübten Dämpfungswirkung teilzuhaben.

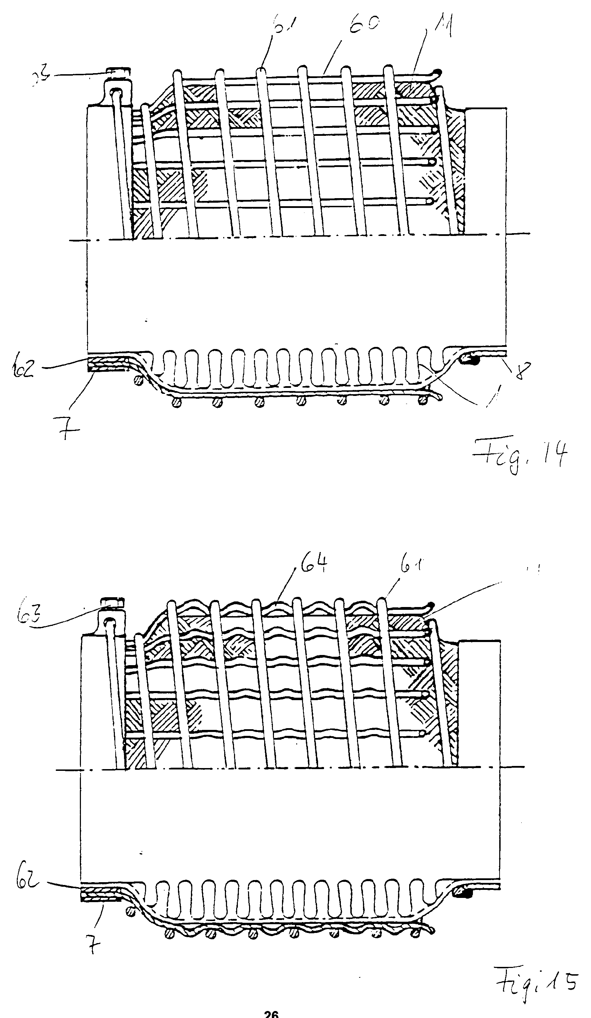

Die in den Fig. 14 bis 16 noch dargestellten Varianten entsprechen den Ausführungsformen gemäß Fig. 10 und insbesondere Fig. 10a.

So ist nach Fig. 14 anstelle der aus den Fig. 10 bzw. 10a ersichtlichen Fingern 42 eine durch Rundmaterial bzw. Drahtmaterial gebildete Fingerausbildung 60 ersichtlich, die wiederum von einer Feder 61 entsprechend der Feder 44 der Bauform gemäß Fig. 10 bzw. 10a umgeben ist, also von einer Feder, deren Innendurchmesser kleiner als der Außendurchmesser der von ihr umgebenen Baueinheit ist, so daß die Feder die Finger 60 radial zusammenschnürt und damit gegen den Geflechtsschlauch 11 drückt, welch letzterer dann damit gegen den Wellschlauch 1 radial verspannt wird.

Die drahtförmigen Finger 60 sind einseitig, bezogen auf Fig. 14 an der linken Seite zwischen einem Stützring 7 und einem weiteren Ring 62 eingefangen und dort festgelegt, während die Feder 61 auf der linken Seite ausgehend von einer Befestigung mittels einer Klemmschraube 63 über die gesamtes Länge der Anordnung geht und am andern, gemäß Fig. 14 am rechten Ende mit den Stützring 8 beispielsweise durch Schweißen verbunden ist.

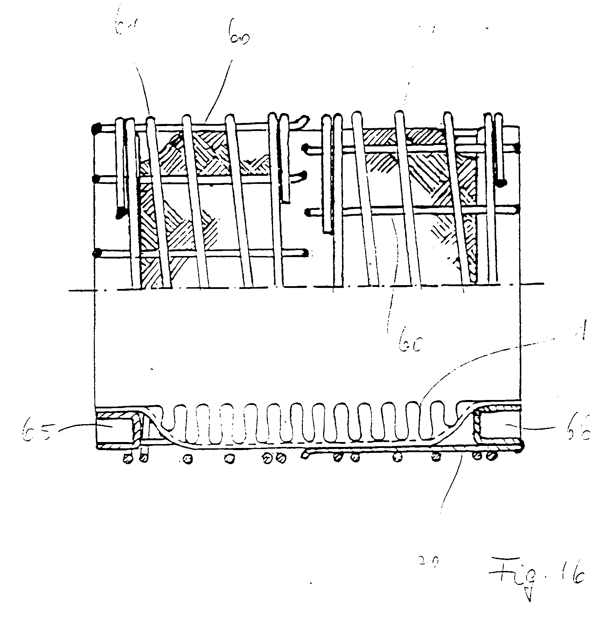

Die Bauform gemäß Fig. 15 unterscheidet sich von der gemäß Fig. 14 nur dadurch, daß die drahtförmigen Finger 64 einen über ihre Längserstreckung wellenförmigen Verlauf haben, so daß die Feder 61 in Axialrichtung bezüglich der Anordnung Ihrer einzelnen Windungen besser fixiert ist.

Gemäß Fig. 16 ist die Anordnung der Fig. 14 und 15 von zwei Seiten aus auf die Mitte des Leitungselementes hin geführt, wozu die Finger 60, die auch in der Gestalt der Finger 64 gemäß 15 gestaltet sein können, in der aus den Fig. 14 und 15 ersichtlichen Weise jeweils an den beiden Enden mit Endringen U-förmigen Querschnittes 65, 66 beispielsweise durch Schweißen verbunden sind, die die Stelle der anhand der früheren Figuren dargestellten Stützringe 7, 8 einnehmen.

Der Vorteil der Bauformen gemäß den Fig. 14 bis 16 gegenüber den Bauformen gemäß Fig. 3 bis 5 und 10 bis 13 besteht darin, daß eine höhere Flexibilität erreichbar ist. Die in den Fig. 3 bis 5 und 10 bis 13 verwendeten bandförmigen Finger können sich nur in einer, nämlich der radialen Richtung optimal biegen. Demgegenüber lassen sich die aus Rundmaterial gefertigten Finger gemäß den Fig. 14 bis 16 in jede Richtung gleichgut ausbiegen. Um hier die Größe der auftretenden und erwünschten Reibungskräfte weiter zu verbessern, kann es zweckmäßig sein, sowohl die Finger 60, 64 als auch das Material der Federn 61 an der Oberfläche aufzurauhen.

Es versteht sich von selbst, daß auch angesichts der großen Zahl der vorstehend geschilderten Ausführungsformen der Gegenstand der Erfindung durch zahlreiche weitere Varianten im Bereich der durch die erläuterten Ausführungsformen gegeben Möglichkeiten verwirklicht werden kann. Wesentlich ist immer nur, daß gegenüber dem den Balg umgebenden Geflechtsschlauch durch ein zusätzliches Bauglied eine Dämpfung auf die durch die Arbeit des Leitungselementes entstehenden Bewegungen ausgeübt wird, wobei das Dämpfungsflied gleichzeitig auch auf den Balg selbst einwirken kann.

## Patentansprüche

1. Flexibles Leitungselement für Abgasleitungen von Verbrennungsmotoren bei Kraftfahrzeugen mit einem mit zylindrischen Anschlußenden (2, 3) versehenen, schraubengangförmig oder ringgewellten Balg (1) aus Metall und einem den Balg (1) unter direktem Verbund umgebenden ersten Geflechtsschlauch (11) aus Metalldraht, wobei Balg (1) und erster Geflechtsschlauch (11) endständig zur Bildung der Anschlußenden (2, 3) des Leitungselementes innerhalb eines zylindrischen Stützringes (7, 8) miteinander und mit diesem verpreßt und die Teile gegenseitig durch Anheften verbunden sind, und wobei
wenigstens ein zusätzliches, von einem der Anschlußenden (2, 3) des Leitungselementes durch dortige Befestigung ausgehendes und im übrigen relativ zum Geflechtsschlauch (11) bewegliches, flexibles, sich im wesentlichen über die Länge des Leitungselementes erstreckendes Dämpfungsglied (12, 23, 24, 26, 32, 33, 37, 38, 39, 40, 41, 42, 44, 50, 52, 60, 64) an den ersten Geflechtsschlauch (11) in Anlage zur Bewegungs- und Schwingungsdämpfung gebracht ist,
dadurch gekennzeichnet,
daß die Dämpfung durch reibende Anlage wenigstens eines metallischen Dämpfungsgliedes (12, 23, 24, 26, 32, 33, 37, 38, 39, 40, 41, 42, 44, 50, 52, 60, 64) an den ersten Geflechtsschlauch (11) erfolgt

2. Leitungselement nach Anspruch 1,
dadurch gekennzeichnet,
daß das Dämpfungsglied ein zweiter, koaxial zum Leitungselement angeordneter und am ersten Geflechtsschlauch (11) von außen anliegender Geflechtsschlauch (12) ist, daß der zweite Geflechtsschlauch mit einem Ende am dortigen Anschlußende des Leitungelementes festgelegt ist, und daß das andere Ende des zweiten Geflechtsschlauches in Axialrichtung im Sinne einer Streckung gegebenenfalls ein- bzw. nachstellbar vorgespannt ist.

3. Leitungselement nach Anspruch 2,
dadurch gekennzeichnet,
daß der zweite Geflechtsschlauch (12) mit seinen Enden zwischen Paaren von Halteringen (13, 14, 15, 16) gefaßt ist, daß das eine Halteringpaar (13, 14) mit dem zugeordneten Anschlußende des Leitungselementes bzw. dem dortigen Stützring (7) verbunden ist, und daß das andere Halteringpaar (15, 16) durch gegebenenfalls ein- bzw. nachstellbare Federmittel (21, 22) in Bewegungsrichtung vom ersten Halteringpaar fort beaufschlagt bzw. vorgespannt ist.

4. Leitungselement nach Anspruch 3,
dadurch gekennzeichnet,
daß ausgehend von den Halteringpaaren (13 - 16) sich nach radial außen erstreckende Stege (17, 18) von zum Leitungselement achsparallelen Führungsstangen (19) durchquert sind, daß die Führungsstangen an einem der Stege (17) axial festgelegt sind, und daß die Führungsstangen gegenüber dem anderen der Stege (18) unter Federkraft (21) gegen die Axialabstützung vorgespannt sind.

5. Leitungselement nach Anspruch 4,
dadurch gekennzeichnet,
daß die Feder (21) die Führungsstangen (19) umgebende Schraubenfedern sind, die sich einerseits an einem gegebenenfalls verstellbaren Widerlager (20) der Führungsstangen (19) und andererseits am zugeordneten Steg (18) abstützen.

6. Leitungselement nach Anspruch 3,
dadurch gekennzeichnet,
daß von den Halteringpaaren (13 - 16) nach radial außen sich erstreckende Stege (17, 18) ausgehen, und daß zwischen die Stege U-förmig gebogene Bügelfedern (22) mit ihren freien Enden eingespannt sind.

7. Leitungselement nach Anspruch 3,
dadurch gekennzeichnet,
daß von den Halteringpaaren (13 - 16) sich nach radial außen erstreckende Stege in Form umlaufender Bunde (35, 36) ausgehen und daß zwischen die Bunde wenigstens eine schraubengangförmig umlaufende Feder (37) mit ihren freien Enden unter Axialbelastung eingespannt ist.

8. Leitungselement nach Anspruch 1,
dadurch gekennzeichnet,
daß das Dämpfungsglied durch vom Anschlußende des Leitungselementes in dessen Längsrichtung ausgehende, mit ihren freien Enden am ersten Geflechtsschlauch (11) von außen in Anlage befindliche Finger bzw. Blech- oder Drahtstreifen (23, 24, 26, 32, 33, 42, 52, 60, 64) gebildet ist.

9. Leitungselement nach Anspruch 8,
dadurch gekennzeichnet,
daß die Finger (23, 24, 26, 32, 33, 42, 52) von einem gemeinsamen, im Bereich des Anschlußendes festgelegten Haltering (25, 28, 30, 31, 43, 53, 65, 66) ausgehen.

10. Leitungselement nach Anspruch 9,
dadurch gekennzeichnet,
daß der Haltering durch den dortigen Stützring gebildet ist.

11. Leitungselement nach Anspruch 8,
dadurch gekennzeichnet,
daß die Fingerenden gegen den ersten Geflechtsschlauch (11) radial federnd vorgespannt sind.

12. Leitungselement nach Anspruch 8,
dadurch gekennzeichnet,
daß die Fingerenden durch einen von außen aufgesetzten, federnden und gegebenenfalls nachstellbaren Spannring (27) gegen den ersten Geflechtsschlauch (11) in Anlage gehalten sind.

13. Leitungselement nach Anspruch 8,
dadurch gekennzeichnet,
daß die Finger (52) von einem zweiten, an ihnen gegebenenfalls axial vorgespannt anliegenden, koaxial zum Leitungselement angeordneten Geflechtsschlauch (12) außen umgeben sind, und daß dieser zweite Geflechtsschlauch endständig an den Anschlußenden des Leitungselementes festgelegt sind.

14. Leitungselement nach Anspruch 8,
dadurch gekennzeichnet,
daß die Finger (42, 60, 64) von wenigstens einem sich im wesentlichen über die Länge des Leitungselementes erstreckenden Federelement in Form einer Schraubenfeder (44) umgeben sind, und daß der Innendurchmesser des Federelementes in dessen entspanntem Zustand kleiner als der Außendurchmesser der Fingeranordnung ist.

15. Leitungselement nach Anspruch 1,
dadurch gekennzeichnet,
daß das Dämpfungsglied durch wenigstens eine von wenigstens einem Anschlußende in dessen Längsrichtung ausgehende, mit ihrem Innenquerschnitt am ersten Geflechtsschlauch (11) unter Radialspannung in Anlage befindliche Schraubenfeder (37, 38, 39, 40, 41) gebildet ist.

16. Leitungselement nach Anspruch 15,
dadurch gekennzeichnet,
daß der Innenquerschnitt der Feder (38) abweichend vom Außenquerschnitt des ersten Geflechtsschlauches (11) ausgebildet ist.

17. Leitungselement nach Anspruch 15,
dadurch gekennzeichnet,
daß das Federmaterial (38, 41) Kreisquerschnitt hat.

18. Leitungselement nach Anspruch 15,
dadurch gekennzeichnet,
daß das Federmaterial (39, 40) Rechteckquerschnitt nach Art eines Flachbandes hat, und daß die Feder mit einer der größeren Oberflächen am ersten Geflechtsschlauch (11) anliegt.

19. Leitungselement nach Anspruch 17 und 18,
dadurch gekennzeichnet,
daß eine den ersten Geflechtsschlauch (11) umgebende Feder (40) mit Rechteckquerschnitt innerhalb einer gegebenenfalls gegenläufig gewundenen Feder (41) mit Kreis- oder Rechteckquerschnitt angeordnet ist.

20. Leitungselement nach Anspruch 1,
dadurch gekennzeichnet,
daß das Dämpfungsglied durch vom Anschlußende des Leitungselementes in dessen Längsrichtung ausgehende, zwischen Balg (1) und erstem Geflechtsschlauch (11) angeordnete Finger (50) bzw. Blechstreifen gebildet ist.

21. Leitungselement nach Anspruch 20,
dadurch gekennzeichnet,
daß die Finger (50) von einem gemeinsamen, im Bereich des Anschlußendes festgelegten Haltering (51) ausgehen.

22. Leitungselement nach einem der Ansprüche 8 bis 14, 20, 21
dadurch gekennzeichnet,
daß je ein Dämpfungsglied mit Fingern (23, 32, 33, 42, 50, 52, 60, 64) von beiden Enden des Leitungselementes ausgehend vorgesehen ist.

23. Leitungselement nach Anspruch 22,
dadurch gekennzeichnet,
daß die sich gegenläufig erstreckenden Finger (32, 33) verzahnungsförmig ineinandergreifend angeordnet sind.

24. Leitungselement nach einem der Ansprüche 8 bis 14, 20, 21,
dadurch gekennzeichnet,
daß die Finger (23, 24, 32, 33, 42, 50, 52) unterschiedliche Länge aufweisen.

25. Leitungselement nach einem der Ansprüche 8 bis 14, 20, 21,
dadurch gekennzeichnet,
daß die Anlage der freien Enden der Finger (23, 24, 26, 32, 33, 42, 50, 52) am ersten Geflechtsschlauch (11) bzw. dem Balg (1) punktförmig, linienförmig oder flächenförmig gestaltet ist.

26. Leitungselement nach wenigstens einem der Ansprüche 8, 9, 14, 22,
dadurch gekennzeichnet,
daß die Finger (64) über ihre Längserstreckung wellenförmig zur intermittierenden Anlage am Geflechtsschlauch ausgebildet sind.

27. Leitungselement nach einem der vorhergehenden Ansprüche,
dadurch gekennzeichnet,
daß im Balg (1) koaxial ein ohne Dichtungseinlage gewickelter Metallschlauch (5) angeordnet ist, daß der Außenquerschnitt des Metallschlauches kleiner als der lichte Innenquerschnitt des Balges (1) ist, und daß der Metallschlauch endständig mit den Anschlußenden des Leitungselementes verpreßt und gegebenenfalls durch Anheften verbunden ist.

## Claims

1. Flexible duct element for motor vehicle internal combustion engine exhaust pipes, having a helically corrugated or ring-corrugated metallic bellows member (1) that is provided with cylindrical connection ends (2, 3), and having a first braided hose (11) of metallic wire that surrounds the bellows member (1) and is in direct connection therewith, the bellows member (1) and the first braided hose (11) being pressed together at the ends inside a cylindrical support ring (7, 8) to form the connection ends (2, 3) of the duct element and being pressed together with that support ring, and the components being connected to one another by fastening, and at least one additional flexible damping member (12, 23, 24, 26, 32, 33, 37, 38, 39, 40, 41, 42, 44, 50, 52, 60, 64) that extends from one of the connection ends (2, 3) of the duct element as a result of being secured there and that is otherwise movable relative to the braided hose (11) and extends substantially over the length of the duct element being brought into contact with the first braided hose (11) in order to damp movement and vibration,
characterised in that the damping is effected by the frictional contact of at least one metallic damping member (12, 23, 24, 26, 32, 33, 37, 38, 39, 40, 41, 42, 44, 50, 52, 60, 64) with the first braided hose (11).

2. Duct element according to claim 1,
characterised in that
the damping member is a second braided hose (12) that is arranged coaxially with the duct element and is in contact with the first braided hose (11) from outside, that the second braided hose is secured by one end to the duct element connection end arranged there, and that the other end of the second braided hose is pre-stessed, optionally adjustably or re-adjustably, in the axial direction in the manner of a stretching operation.

3. Duct element according to claim 2,
characterised in that
the second braided hose (12) is gripped by its ends between pairs of holding rings (13, 14, 15, 16), that one pair of holding rings (13, 14) is connected to the associated connection end of the duct element or to the support ring (7) provided there, and that the other pair of holding rings (15, 16) is acted upon or pre-stressed in the direction of movement away from the first pair of holding rings by optionally adjustable or re-adjustable spring means (21, 22).

4. Duct element according to claim 3,
characterised in that
guide rods (19) that are axially parallel to the duct element pass through webs (17, 18) that extend radially outwards from the holding ring pairs (13 - 16), that the guide rods are secured axially to one of the webs (17), and that the guide rods are pre-stressed under spring force (21) against the axial support with respect to the other of the webs (18).

5. Duct element according to claim 4,
characterised in that
the springs (21) are helical springs that surround the guide rods (19) and are supported on the one hand at an optionally adjustable abutment (20) of the guide rods (19) and, on the other hand, at the associated web (18).

6. Duct element according to claim 3,
characterised in that
webs (17, 18) running radially outwards extend from the holding ring pairs (13 - 16), and that bow springs (22) bent in a U shape are clamped by their free ends between the webs.

7. Duct element according to claim 3,
characterised in that
webs running radially outwards extend in the form of encircling collars (35, 36) from the holding ring pairs (13 - 16), and that at least one helical spring (37) is clamped by its free ends between the collars, with axial loading.

8. Duct element according to claim 1,
characterised in that
the damping member is formed by fingers or sheet-metal or wire strips (23, 24, 26, 32, 33, 42, 52, 60, 64) that extend from the connection end of the duct element in the longitudinal direction thereof and the free ends of which are in contact with the first braided hose (11) from outside.

9. Duct element according to claim 8,
characterised in that
the fingers (23, 24, 26, 32, 33, 42, 52) extend from a common holding ring (25, 28, 30, 31, 43, 53, 65, 66) that is secured in the region of the connection end.

10. Duct element according to claim 9,
characterised in that
the holding ring is formed by the support ring arranged there.

11. Duct element according to claim 8,
characterised in that
the ends of the fingers are resiliently pre-stressed against the first braided hose (11) in radial manner.

12. Duct element according to claim 8,
characterised in that
the ends of the fingers are held in contact with the first braided hose (11) by a resilient and optionally readjustable clamping ring (27) that is fitted from outside.

13. Duct element according to claim 8,
characterised in that
the fingers (52) are surrounded at the outside by a second braided hose (12) that is arranged coaxially with the duct element and is in contact with those fingers optionally in axially pre-stressed manner, and that that second braided hose is secured at the ends to the connection ends of the duct element.

14. Duct element according to claim 8,
characterised in that
the fingers (42, 60, 64) are surrounded by at least one spring element in the form of a helical spring (44) that extends substantially over the length of the duct element, and that the inside diameter of the spring element in its relaxed state is smaller than the outside diameter of the finger arrangement.

15. Duct element according to claim 1,
characterised in that
the damping member is formed by at least one helical spring (37, 38, 39, 40, 41) that extends from at least one connection end in the longitudinal direction thereof and is in contact by way of its inside cross-section with the first braided hose (11) with radial tensioning.

16. Duct element according to claim 15,
characterised in that
the form of the inside cross-section of the spring (38) differs from that of the outside cross-section of the first braided hose (11).

17. Duct element according to claim 15,
characterised in that
the spring material (38, 41) has a circular cross-section.

18. Duct element according to claim 15,
characterised in that
the spring material (39, 40) has a rectangular cross-section in the manner of a flat ribbon, and that the spring is in contact with the first braided hose (11) by way of one of the larger surfaces.

19. Duct element according to claim 17 and claim 18,
characterised in that
a spring (40) having a rectangular cross-section and surrounding the first braided hose (11) is arranged inside a spring (41) having a circular or rectangular cross-section that is optionally coiled in the opposite direction.

20. Duct element according to claim 1,
characterised in that
the damping member is formed by fingers (50) or sheet-metal strips that extend from the connection end of the duct element in the longitudinal direction thereof and are arranged between the bellows member (1) and the first braided hose (11).

21. Duct element according to claim 20,
characterised in that
the fingers (50) extend from a common holding ring (51) secured in the region of the connection end.

22. Duct element according to any one of claims 8 to 14, 20 and 21,
characterised in that
a damping member having fingers (23, 32, 33, 42, 50, 52, 60, 64) extends from each end of the duct element.

23. Duct element according to claim 22,
characterised in that
the fingers (32, 33), which extend in opposite directions, engage in one another in the manner of teeth.

24. Duct element according to any one of claims 8 to 14, 20 and 21,
characterised in that
the fingers (23, 24, 32, 33, 42, 50, 52) have different lengths.

25. Duct element according to any one of claims 8 to 14, 20 and 21,
characterised in that
the contact of the free ends of the fingers (23, 24, 26, 32, 33, 42, 50, 52) with the first braided hose (11) or the bellows member (1) is punctiform, linear or planar.

26. Duct element according to at least one of claims 8, 9, 14 and 22,
characterised in that
the fingers (64) are constructed in corrugated manner over their longitudinal extent for intermittent contact with the braided hose.

27. Duct element according to any one of the preceding claims,
characterised in that
a metallic hose (5) coiled without a sealing insert is arranged coaxially in the bellows member (1), that the outside cross-section of the metallic hose is smaller than the clear inside cross-section of the bellows member (1), and that, at its ends, the metallic hose is pressed together with the connection ends of the duct element and is optionally connected thereto by fastening.

## Revendications

1. Élément de conduite flexible pour tuyaux d'échappement de moteurs à combustion interne dans des véhicules automobiles, comportant un soufflet métallique (1) pourvu d'extrémités cylindriques de raccordement (2, 3) et réalisé sous la forme d'un filetage ou avec des ondulations annulaires, et un premier tuyau en forme de gaine tressée (11) formé d'un fil métallique et entourant le soufflet (1) en établissant une liaison directe avec ce dernier, et dans lequel le soufflet (1) et le premier tuyau en forme de gaine tressée (11) sont réunis entre eux au niveau de leurs extrémités de manière à former des extrémités de raccordement (2, 3) de l'élément de conduite, à l'intérieur d'une bague de support cylindrique (7, 8) et sont serrés avec cette bague de support, les éléments sont réunis entre eux au moyen d'une fixation réciproque, et dans lequel au moins un organe supplémentaire flexible d'amortissement (12, 23, 24, 26, 32, 33, 37, 38, 39, 40, 41, 42, 44, 50, 52, 60, 64) qui part d'une des extrémités de raccordement (2, 3) de l'élément de conduite, en y étant fixé en cet endroit, est par ailleurs mobile par rapport au tuyau en forme de gaine tressée (11) et s'étend sensiblement sur toute la longueur de l'élément de conduite et est appliqué contre le premier tuyau en forme de gaine tressée (11) pour réaliser l'amortissement de déplacement et l'amortissement des vibrations, caractérisé en ce que l'amortissement est réalisé au moyen d'une application avec frottement d'au moins un organe métallique d'amortissement (12, 23, 24, 26, 32, 33, 37, 38, 39, 40, 41, 42, 44, 50, 52, 60, 64) contre le tuyau en forme de gaine tressée (11).

2. Élément de conduite selon la revendication 1, caractérisé en ce que l'organe d'amortissement est un second tuyau en forme de gaine tressée (12), qui est disposé coaxialement par rapport à l'élément de conduite et est appliqué extérieurement contre le premier tuyau en forme de gaine tressée (11), que le second tuyau en forme de gaine tressée est fixé par une extrémité sur l'extrémité de raccordement, présente en cet endroit, de l'élément de conduite et que l'autre extrémité du second tuyau en forme de gaine tressée est précontrainte dans la direction axiale, éventuellement d'une manière réglable ou d'une manière réglable ultérieurement, dans le sens d'un étirage.

3. Élément de conduite selon la revendication 2, caractérisé en ce que le second tuyau en forme de gaine tressée (13) est enserré, au niveau de ses extrémités, entre des couples de bagues de retenue (13, 14, 15, 16), qu'un couple de bagues de retenue (13, 14) est relié à l'extrémité de raccordement associée de l'élément de conduite ou à la bague de support (7) présente en cet endroit, et que l'autre couple de bagues de retenue (15, 16) sont chargées ou précontraintes par des moyens formant ressorts (21, 22) éventuellement réglables ou réglables ultérieurement, dans la direction de déplacement à partir du premier couple de bagues de retenue.

4. Élément de conduite selon la revendication 3, caractérisé en ce que des barrettes (17, 18) qui s'étendent radialement vers l'extérieur à partir des couples de bagues de retenue (13-16) sont traversées par des tiges de guidage (19), dont les axes sont parallèles à l'élément de conduite, que les tiges de guidage sont fixés axialement à l'une des barrettes (17) et que les tiges de guidage sont précontraintes contre l'appui axial, par rapport à l'autre des barrettes (18), sous la force de ressorts (21).

5. Élément de conduite selon la revendication 4, caractérisé en ce que les ressorts (21) sont des ressorts hélicoïdaux qui entourent les tiges de guidage (19) et qui, pour leur part, prennent appui contre une butée (20), qui est éventuellement réglable, des tiges de guidage (19) et d'autre part sur la barrette associée (18).

6. Élément de conduite selon la revendication 3, caractérisé en ce que des barrettes (17, 18), qui sont dirigées radialement vers l'extérieur, s'étendent à partir des couples de bagues de retenue (13-16) et que des étriers élastiques repliés en forme de U (22) sont insérés, par leurs extrémités, à l'état bandé, entre les barrettes.

7. Élément de conduite selon la revendication 3, caractérisé en ce que des barrettes, qui sont dirigées radialement vers l'extérieur, s'étendent sous la forme de collets circonférentiels (35, 36) à partir des couples de bagues de retenue (13-16) et qu'au moins un ressort circonférentiel en forme de filetage hélicoïdal (37) est inséré par ses extrémités, à l'état bandé, sous l'application d'une contrainte axiale, entre les collets.

8. Élément de conduite selon la revendication 1, caractérisé en ce que l'organe d'amortissement est formé par des doigts ou bandes de tôle ou de fil (23, 24, 26, 32, 33, 42, 52, 60, 64), qui s'étendent à partir de l'extrémité de raccordement de l'élément de conduite, dans la direction longitudinale de ce dernier, et dont les extrémités libres s'appliquent de l'extérieur contre le premier tuyau en forme de gaine tressée (11).

9. Élément de conduite selon la revendication 8, caractérisé en ce que les doigts (23, 24, 26, 32, 33, 42, 52) s'étendent à partir d'une bague de retenue commune (25, 28, 30, 31, 43, 53, 65, 66), qui est fixée dans la zone de l'extrémité de raccordement.

10. Élément de conduite selon la revendication 9, caractérisé en ce que la bague de retenue est formée par la bague de support présente en cet endroit.

11. Élément de conduite selon la revendication 8, caractérisé en ce que les extrémités des doigts sont précontraintes élastiquement du point de vue radial, contre le premier tuyau en forme de gaine tressée (11).

12. Élément de conduite selon la revendication 8, caractérisé en ce que les extrémités des doigts sont maintenues appliquées contre le premier tuyau en forme de gaine tressée (11), par une bague de serrage (27), qui est montée extérieurement, est élastique et éventuellement réglable ultérieurement.

13. Elément de conduite selon la revendication 8, caractérisé en ce que les doigts (52) sont entourés extérieurement par un second tuyau en forme de gaine tressée (12), qui s'applique contre les doigts en étant éventuellement précontraint axialement et est disposé coaxialement par rapport à l'élément de conduite, et que ce second tuyau en forme de gaine tressée est fixé, au niveau de ses extrémités, aux extrémités de raccordement de l'élément de conduite.

14. Élément de conduite selon la revendication 8, caractérisé en ce que les doigts (42, 60, 64) sont entourés par au moins un élément de ressort, qui se présente sous la forme d'un ressort hélicoïdal (44) et s'étend sensiblement sur la longueur de l'élément de conduite, et que le diamètre intérieur de l'élément de ressort dans son état détendu est inférieur au diamètre extérieur du dispositif des doigts.

15. Élément de conduite selon la revendication 1, caractérisé en ce que l'élément d'amortissement est formé par au moins un ressort hélicoïdal (37, 38, 39, 40, 41), qui s'étend à partir d'au moins une extrémité de raccordement, dans la direction longitudinale de l'organe d'amortissement et qui s'applique par sa section transversale intérieure contre le premier tuyau en forme de gaine tressée (11), sous une précontrainte radiale.

16. Élément de conduite selon la revendication 15, caractérisé en ce que la section transversale intérieure du ressort (38) diffère de la section transversale extérieure du premier tuyau en forme de gaine tressée (11).

17. Élément de conduite selon la revendication 15, caractérisé en ce que le matériau (38, 40) du ressort possède une section transversale circulaire.

18. Élément de conduite selon la revendication 15, caractérisé en ce que le matériau du ressort (39, 40) possède une section transversale rectangulaire à la manière d'une bande plate et que le ressort s'applique, par l'une des surfaces les plus étendues, contre le tuyau en forme de gaine tressée (11).

19. Élément de conduite selon la revendication 17 et 18, caractérisé en ce qu'un ressort (40), qui entoure le premier tuyau en forme de gaine tressée (11) et possède une section transversale rectangulaire est disposé à l'intérieur d'un ressort (41), qui est éventuellement enroulé en sens opposé et possède une section transversale circulaire ou rectangulaire.

20. Élément de conduite selon la revendication 1, caractérisé en ce que l'organe d'amortissement est formé par des doigts (50) ou des bandes de tôle, qui s'étendent à partir de l'extrémité de raccordement de l'élément de conduite, dans la direction longitudinale de cet organe d'amortissement et sont disposées entre le soufflet (1) et le premier tuyau en forme de gaine tressée (11).

21. Élément de conduite selon la revendication 20, caractérisé en ce que les doigts (50) s'étendent à partir d'une bague de retenue commune (51), qui est fixée dans la zone de l'extrémité de raccordement.

22. Élément de conduite selon l'une des revendications 8 à 14, 20, 21, caractérisé par le fait que respectivement un organe d'amortissement est équipé de doigts (23, 32, 33, 42, 50, 52, 60, 64) qui s'étendent à partir des deux extrémités de l'élément de conduite.

23. Élément de conduite selon la revendication 22, caractérisé en ce que les doigts (32, 33), qui s'étendent en des sens opposés, sont disposés de manière à s'interpénétrer à la manière de dentures.

24. Élément de conduite selon l'une des revendications 8 à 14, 20, 21, caractérisé en ce que les doigts (23, 24, 32, 33, 42, 50, 52) possèdent des longueurs différentes.

25. Élément de conduite selon l'une des revendications 8 à 14, 20, 21, caractérisé en ce que l'application des extrémités libres des doigts (23, 24, 26, 32, 33, 42, 50, 52) contre le premier tuyau en forme de gaine tressée (11) ou contre le soufflet (1) est réalisée sous la forme d'un point, d'une ligne ou d'une surface.

26. Élément de conduite selon au moins l'une des revendications 8, 9, 14, 22, caractérisé en ce que les doigts (64) sont agencés avec en forme ondulée sur leur étendue longitudinale, de manière à s'appliquer de façon intermittente contre le tuyau en forme de gaine tressée.

27. Élément de conduite selon l'une des revendications précédentes, caractérisé en ce que dans le soufflet (1) est disposé coaxialement un tuyau métallique (5), qui est enroulé sans insert d'étanchéité, que la section transversale extérieure du tuyau métallique est inférieure à la section transversale intérieure du soufflet (1), et qu'à ses extrémités, le tuyau métallique est serré contre les extrémités de raccordement de l'élément de conduite et éventuellement fixé à cet élément.
